# EUROPÄISCHE PATENTSCHRIFT

(11) **EP 1 794 582 B1**
(45) Veröffentlichungstag und Bekanntmachung des Hinweises auf die Patenterteilung: **27.05.2009**
(21) Anmeldenummer: 05771269.7
(22) Anmeldetag: 18.07.2005
(51) Int. Cl.: G01N 27/90, G01N 22/02

(54) **VERFAHREN UND VORRICHTUNG ZUR ZERSTÖRUNGS-UND BERÜHRUNGSFREIEN ERFASSUNG VON FEHLERN IN EINEM RELATIV ZU EINER SONDE BEWEGTEN PRÜFLING**
METHOD AND DEVICE FOR THE NON-DESTRUCTIVE AND CONTACTLESS DETECTION OF FLAWS IN A TEST PIECE MOVED RELATIVE TO A PROBE
PROCEDE ET DISPOSITIF POUR LA DETECTION SANS DESTRUCTION ET SANS CONTACT DE DEFAUTS DANS UN ECHANTILLON EN DEPLACEMENT PAR RAPPORT A UNE SONDE

(30) Priorität: 19.07.2004 DE 102004034881; 12.08.2004 DE 102004039348; 23.08.2004 DE 102004040860; 21.10.2004 DE 102004051506; 25.10.2004 DE 102004051949
(43) Veröffentlichungstag der Anmeldung: 13.06.2007
(73) Patentinhaber: Prüftechnik Dieter Busch AG, 85737 Ismaning (DE)
(72) Erfinder: HÖLZL, Roland, 81369 München (DE); HERMANN, Michael, 78048 Villingen-Schwenningen (DE)
(86) Internationale Anmeldenummer: PCT/DE2005/001263
(87) Internationale Veröffentlichungsnummer: WO 2006/007826

(56) Entgegenhaltungen:
- EP-A- 1 189 058
- US-A- 4 445 088
- US-A- 5 175 498
- US-A- 5 424 640

## Beschreibung

Die vorliegende Erfindung betrifft ein Verfahren und eine Vorrichtung zur zerstörungs- und berührungsfreien Erfassung von Fehlern, insbesondere mittels Wirbelströmen, in einem relativ zu einer durch eine Wirkbreite charakterisierten Sonde bewegten Prüfling.

Ein übliches Messverfahren zur zerstörungs- und berührungsfreien Erfassung von Fehlern in einem Prüfling, insbesondere metallischem Halbzeug, ist das Induzieren und Messen von Wirbelströmen in dem Prüfling. Dabei wird der Prüfling mittels einer sinusförmig bestromten Sendespule mit periodischen elektromagnetischen Wechselfeldern beaufschlagt. Die dadurch in dem Prüfling induzierten Wirbelströme induzieren wiederum in einer als Sonde verwendeten Spulenanordnung, die eine einzelne Spule ("Absolutspule") oder zwei subtraktiv geschaltete Spulen "(Differenzspule") aufweisen kann, ein periodisches elektrisches Signal, das eine Trägerschwingung entsprechend der Senderträgerfrequenz aufweist, deren Amplitude und/oder Phase durch einen Fehler in dem Prüfling in charakteristischer Weise moduliert wird, wenn ein Fehler in den empfindlichen Bereich der Sonde, d.h. in die Wirkbreite der Sonde, gelangt. Üblicherweise wird zum Abtasten des Prüflings der Prüfling linear bezüglich der Sonde bewegt, wobei jedoch auch Anordnungen mit rotierender Sonde bekannt sind. Das von der Sonde erfasste Signal wird üblicherweise analog demoduliert, z.B. mittels Synchrondemodulation, und anschließend einer Auswertung unterzogen, um Fehler in dem Prüfling zu erkennen. Eine Digitalisierung des Signals erfolgt dabei üblicherweise erst für die Auswertung und Darstellung des Fehlersignals, d.h. nach der Demodulation des Spulensignals. Ein Beispiel für ein solches Verfahren ist in der DE 40 03 330 A1 zu finden.

Solche Wirbelstrommessverfahren sind aufgrund des für die analoge Demodulation erforderlichen Aufwands relativ aufwendig und kostspielig. Ferner ist zu berücksichtigen, dass üblicherweise für unterschiedliche Relativ-Geschwindigkeiten des Prüflings zur Sonde, d.h. bei unterschiedlichen Ausstoss- bzw. Testgeschwindigkeiten, unterschiedliche Filtersätze für das demodulierte Signal erforderlich sind, was bei variabler Prüflingsgeschwindigkeit einen zusätzlichen Aufwand mit sich bringt.

In der US 5,175,498 ist ein Wirbelstrommessverfahren beschrieben, bei welchem bereits das von der Spulensonde aufgenommene Messsignal mittels eines triggerbaren A/D-Wandlers digitalisiert und anschließend in digitaler Form einer Demodulation mittels Fourierlransformation unterzogen wird. Das Triggern des A/D-Wandlers, d.h. die Abtastrate, wird in Abhängigkeit von der mittels eines Encoders erfaßten Vorschubgeschwindigkeit des Prüflings gesteuert, um von einer Rückwärtsbewegung des Prüflings resultierende Fehler bei der Signalauswertung zu vermeiden.

In der US 4,445,088 ist ein Magnetstreufluss-Messverfahren beschrieben, in welchem ein metallischer Prüfling relativ zu einer Sonde bewegt wird, wobei das von der Sonde erfasste Messsignal nach Durchlaufen eines Bandpassfilters mittels eines triggerbaren A/D-Wandlers digitalisiert wird, wobei die Triggerung des Wandlers, d.h. die Abtastrate, von der mittels eines Geschwindigkeitssensors erfaßten Vorschubgeschwindigkeit des Prüflings gesteuert wird. Zur Fehlererkennung wird die Amplitude des digitalisierten Signals hinsichtlich der Überschreitung eines Schwellwerts ausgewertet, wobei die Wahl der Abtastrate in Abhängigkeit von der Prüfungsgeschwindigkeit dazu dient, eine von der Prüflingsgeschwindigkeit unabhängige vorgegebene Messgenauigkeit zu erzielen.

Es ist Aufgabe der vorliegenden Erfindung, ein besonders einfaches Verfahren zur zerstörungs- und berührungsfreien Erfassung von Fehlern in einem bewegten Prüfling zu schaffen, bei welchem mittels einer Sonde ein periodisches elektrisches Signal erfaßt wird, das durch Fehler im Prüfling hinsichtlich Amplitude und/oder Phase moduliert wird. Ferner soll eine zur Ausführung eines solchen Verfahrens geeignet Vorrichtung geschaffen werden.

Diese Aufgabe wird erfindungsgemäß gelöst durch ein Verfahren gemäß Anspruch 1 sowie eine Vorrichtung gemäß Anspruch 25.

Ein wesentlicher Aspekt der vorliegenden Erfindung besteht darin, dass das Sondensignal mit einem ganzzahligen Bruchteil der Frequenz der Trägerschwingung abgetastet, d.h. digitalisiert, wird, d.h. es findet eine Unterabtastung der Trägerschwingung statt.

Auf diese Weise wird die Trägerschwingung aus dem Messsignal eliminiert, wodurch die ansonsten übliche Demodulation des Messsignals entfällt und somit eine wesentliche Vereinfachung des Verfahrens und eine wesentliche Verringerung des Aufwands für eine ansonsten erforderliche Demodulation, z.B. analoge Synchrondemodulation, erzielt werden kann, was zu erheblichen Kosteneinsparungen und gegebenenfalls auch zu Bauraumeinsparungen führt.

Ferner ermöglicht die Unterabtastung die Verwendung von A/D-Wandlern mit sehr hoher Auflösung, die üblicherweise relativ langsam, d.h. in ihrer maximalen Abtastrate relativ beschränkt, sind.

Außerdem führt die Unterabtastung dazu, dass das Nutzsignal mit einer relativ niedrigen Datenrate erhalten wird, was wiederum die Darstellung des Nutzsignals erleichtert, so dass beispielsweise Standardbussysteme und eventuell Funkbussysteme verwendet werden können, was bei hohen Datenraten nicht oder nur nach Datenkompression möglich wäre.

Auch erlaubt die Unterabtastung das Ausführen des Messverfahrens mit relativ niedrigem Energieverbrauch, wobei sogar während Zeitintervallen, in welchen keine Abtastung erfolgt, der Sender abgeschaltet werden könnte, falls beispielsweise nur bei jeder zehnten Periode der Trägerschwingung oder noch seltener abgetastet wird. Dieser Aspekt ist insbesondere für tragbare Geräte im Batteriebetrieb von Bedeutung oder falls eine kabellose, d.h. drahtlos mit der Auswerteeinheit verbundene, Sonde verwendet werden soll.

Schließlich kann sich bei der Unterabtastung eine im Vergleich zu quasi-kontinuierlicher Abtastung verringerte Anfälligkeit gegenüber nichtperiodischen Störsignalen ergeben, da solche Störsignale, sofern sie nicht in den jeweiligen Abtastzeitraum fallen, im Nutzsignal überhaupt nicht wahrgenommen werden, während sich bei quasi-kontinuierlicher Abtastung alle Störsignale im Nutzsignal niederschlagen.

Gemäß einem weiteren wesentlichen Aspekt der Erfindung wird die Abtastrate, d.h. der Grad der Unterabtastung, in Abhängigkeit von der sogenannten Fehlerfrequenz, d.h. dem Quotienten aus der Relativgeschwindigkeit zwischen Prüfling und Sonde und der Wirkbreite der Sonde, gewählt.

Da die Dauer des von einem Fehler verursachten Nutzsignals, und damit die Fehlerfrequenz, im wesentlichen nur von der Ausdehnung des empfindlichen Bereichs der Sonde, d.h. der Wirkbreite, und der relativen Geschwindigkeit des Prüflings bezüglich der Sonde abhängt, kann auf diese Weise einerseits sichergestellt werden, dass die Genauigkeit der Darstellung des Nutzsignals nicht von der Geschwindigkeit des Prüflings abhängt (durch entsprechende Wahl der Abtastrate kann sichergestellt werden, dass immer in etwa die gleiche Anzahl von Abstastpunkten in jedes Fehlersignal fällt), und andererseits kann sichergestellt werden, dass das Fehlersignal eines bestimmten Fehlers unabhängig von der Geschwindigkeit des Prüflings im wesentlichen gleich aussieht, was das Erkennen des Fehlers stark erleichtert.

Ein weiterer Vorteil der geschwindigkeitsangepassten Unterabtastung besteht darin, dass auf diese Weise die digitale Filtereinheit, mittels welcher das von der A/D-Wandlerstufe gelieferte digitale Messsignal gefiltert wird, um ein störungsfreies Nutzsignal zu gewinnen, auf sehr einfache Weise in Abhängigkeit von der Fehlerfrequenz eingestellt werden kann, nämlich durch Takten des digitalen Filters mit der Abtastrate (bei einem digitalen Filter hängt die Eckfrequenz direkt von der Taktrate ab). Auf diese Weise kann mit einem einzigen Filtersatz gearbeitet werden, der durch entsprechende Wahl der Abtastrate, d.h. Taktrate, automatisch mit seinen Eckfrequenzen an die von der Prüflingsgeschwindigkeit abhängigen Bandbreite des Fehlersignals angepasst ist.

Die sogenannte Fehlerfrequenz entspricht üblicherweise dem Maximum des Fehlerspektrum, d.h. der Frequenz mit der höchsten Intensität. Die Fehlerbandbreite ist der Frequenzbereich um die Fehlerfrequenz herum, in welchem noch für die Fehlererkennung bzw. Fehlerdarstellung maßgebliche Informationen zu finden sind. Die Wirkbreite der Sonde hängt einerseits von der geometrischen Ausgestaltung der Sonde ab, jedoch auch von den Rahmenbedingungen des Einsatzes der Sonde, wie z.B. Abstand der Sonde vom Prüfling (Füllfaktor), Frequenz der Trägerschwingung, Material des Prüflings, etc. ab. Physikalisch entspricht die Wirkbreite der Länge, die der reziproken Fehlerfrequenz entspricht und sich aus der Prüflingsgeschwindigkeit dividiert durch das Zweifache der Fehlerfrequenz ergibt. Die Wirkbreite gibt somit die Länge an, über welche eine bestimmte (Fehler-)Stelle des Prüflings das von der Sonde aufgenommene Messsignal beeinflussen kann.

Vorzugsweise bedient sich die Erfindung der Messung von Wirbelströmen in dem Prüfling, d.h. es handelt sich bei dem Sender um eine Spule, an die eine hochfrequente Wechselspannung, vorzugsweise im Frequenzbereich von 1 kHz bis 5 MHz angelegt wird, um in dem Prüfling Wirbelströme zu induzieren, wobei es sich bei der Sonde um eine Spulenanordnung handelt, in welcher die Wirbelströme das periodische Signal induzieren. Die Sonde ist dabei vorzugsweise als Differenzspule ausgebildet.

Alternativ kann die Erfindung jedoch auch auf einem sogenannten EMAT (Electromagnetic Acoustic Transducer)-Verfahren basieren, wobei der Sender mittels elektromagnetischer Anregung Schallwellen in dem Prüfling erzeugt und die Sonde Schallwellen in dem Prüfling erfasst und in das periodische elektrische Signal wandelt.

Bei einer weiteren Variante kann die Erfindung eine Mikrowellenmessung verwenden, wobei der Sender Mikrowellen in den Prüfling einstrahlt und die Sonde Mikrowellen in das periodische elektrische Signal wandelt.

Vorzugsweise entsteht die Relativbewegung zwischen Prüfling und der Sonde dadurch, dass der Prüfling linear zur Sonde bewegt wird. Grundsätzlich kann jedoch die Relativbewegung zwischen dem Prüfling und der Sonde auch dadurch entstehen, dass die Sonde bezüglich des Prüflings rotiert.

Die Wechselspannung für den Sender kann aus einem binären Signal durch Kurvenformung erzeugt werden, wobei vorzugsweise das Triggersignal für die A/D-Wandlerstufe dadurch erzeugt wird, dass die Frequenz des für die Erzeugung der Senderwechselspannung verwendeten binären Signals durch eine ganze Zahl geteilt wird. Die ganze Zahl, durch welche die Frequenz der Trägerschwingung geteilt wird, um die A/D-Wandlerstufe zu triggern, wird vorzugsweise umgekehrt proportional zu der Fehlerfrequenz gewählt, so dass die gewählte Abtastrate mindestens annähernd proportional zur Fehlerfrequenz gewählt werden kann. Vorzugsweise wird diese ganze Zahl so gewählt, dass in ein Fehlerintervall, d.h. ein Zeitintervall, das dem Inversen der Fehlerfrequenz entspricht, mindestens 5, vorzugsweise mindestens 20, jedoch höchstens 100, vorzugsweise höchstens 50, Abtastungen durch die A/D-Wandlerstufe fallen.

Wie bereits erwähnt, kann das Einstellen der frequenzselektiven zweiten Filtereinheit in Abhängigkeit von der Fehlerfrequenz selbsttätig dadurch erfolgen, dass die zweite Filtereinheit mit der Abtastrate per A/D-Wandlerstufe getaktet wird, da bei einem digitalen Filter die Eckfrequenz direkt proportional zur Taktfrequenz ist. Zweckmäßigerweise weist die zweite Filtereinheit einen Tiefpass auf, um Anteile oberhalb der Fehlerbandbreite auszublenden, sowie einen Hochpass, um Gleichanteile des digitalen Signals anzublenden. Zweckmäßigerweise liegt die Eckfrequenz des Tiefpasses über der Fehlerfrequenz, vorzugsweise über dem Zweifachen der Fehlerfrequenz, während die Eckfrequenz des Hochpasses unter der Fehlerfrequenz, vorzugsweise unter einem Viertel der Fehlerfrequenz liegt. Da die bevorzugten Eckfrequenzen der zweiten Filtereinheit direkt von der Fehlerfrequenz abhängen, kann dadurch, dass die Abtastrate des Signals ebenfalls in Abhängigkeit von der Fehlerfrequenz gewählt wird und die zweite Filtereinheit mit dieser Abtastrate getaktet wird, auf besonders einfache Weise für eine automatische optimale Anpassung der Eckfrequenzen der Filtereinheit an die Fehlerfrequenz, d.h. die Prüflingsgeschwindigkeit und die Wirkbreite der Sonde, erzielt werden. Grundsätzlich können die Eckfrequenzen näher an der Fehlerfrequenz liegen als bei herkömmlichen Verfahren, da durch die genaue Nachführung der Filter hinsichtlich der Fehlerfrequenz, d.h. insbesondere der Prüflingsgeschwindigkeit, die Gefahr, dass die Filter Fehlerinformation abschneiden, verringert ist.

Vorzugsweise wird die Frequenz der Trägerschwingung so gewählt, dass sie mindestens das zehnfache, noch besser mindestens das zwanzigfache, der Fehlerfrequenz beträgt, da ansonsten die Reproduzierbarkeit eines Fehlers (d.h. die Reproduzierbarkeit für einen bestimmen Fehler typischen Fehlersignals) beeinträchtigt sein kann, was die Fehlererkennung erschweren würde.

Obschon grundsätzlich auch Lösungen möglich sind, bei welchen nur ein einzelner Wert pro abgetasteter Vollwelle erfasst wird, wobei dann die Phasenlage auf indirekte Weise bestimmt werden müsste, werden vorzugsweise pro abgetasteter Vollwelle zwei Werte mit einem festen Phasenversatz gewonnen, wobei dies vorzugsweise mit zwei A/D-Wandlern durchgeführt wird, d.h. die Wandlerstufe weist zwei parallel geschaltete A/D-Wandler auf, die mit gleicher Frequenz so getriggert werden, dass sie um eine feste Phasendifferenz versetzt abtasten, wobei die Phasendifferenz vorzugsweise 90° oder ein ganzteiliges Vielfaches von 360° plus 90° beträgt (die Phasendifferenz muss aber nicht unbedingt genau 90° betragen, sondern könnte beispielsweise zwischen 85 und 95° liegen). Mittels einer solchen phasenversetzten Abtastung kann sichergestellt werden, dass trotz der Unterabtastung die maximale Signalinformation gewonnen wird, und es wird das digitale Messsignal als zweikomponentiges Signal, d.h. mit Phasen- und Amplitudeninformation, erhalten, wodurch die Fehlererkennung verbessert wird. Dabei ist es zweckmäßig, dass die beiden Komponenten des von der mit zwei A/D-Wandlern ausgestatteten A/D-Wandlerstufe gelieferten digitalen Messsignals separat mittels der zweiten Filtereinheit gefiltert werden, um das Nutzsignal als zweikomponentiges Signal zu gewinnen, wobei dann bei der Auswertung des Nutzsignals beide Komponenten berücksichtigt werden können.

Um eine solche phasenversetzte Abtastung durchzuführen, ist es nicht notwendigerweise erforderlich, genau zwei A/D-Wandler zu verwenden. Statt dessen könnte auch nur ein einziger, hinreichend schneller A/D-Wandler verwendet werden, der beide Abtastungen, d.h. z.B. diejenige bei 0° und diejenige bei 90°, vornimmt, wobei diese beiden Abtastwerte dann wie bei der Verwendung von zwei A/D-Wandlern getrennt weiterverarbeitet werden, um eine zweikomponentige Signalauswertung zu erreichen. Eine Verwendung von sehr langsamen A/D-Wandlern wäre möglich, wenn z.B. 4, 8, oder 16, usw. A/D-Wandler verwendet werden, die dann nicht bei jeden Triggerimpuls an die A/D-Wandlerstufe aktiv werden, sondern nur bei jedem 2, 4, bzw. 8-ten, usw., d.h. die Abtastungsarbeit für jede der beiden Phasenlagen wird entsprechend zeitlich auf jeweils mehrere A/D-Wandler aufgeteilt.

Vorzugsweise weist die A/D-Wandlerstufe eine Auflösung von mindestens 16 Bit auf, wobei vorzugsweise Flash-Wandler oder SAR-Wandler verwendet werden.

Grundsätzlich kann die Beaufschlagung des Prüflings mittels des Senders, d.h. die Einstrahlung der elektromagnetischen Wechselfelder, mindestens für einen Teil eines jeden Intervalls zwischen zwei aufeinander folgenden Triggersignalen für die A/D-Wandlerstufe unterbrochen werden, da in dieser Zeit ohnehin keine Signalerfassung, d.h. Abtastung, stattfindet (je nach Einzelfall können diese Abtastpausen unter Umständen sich über viele Periodeb der Trägerschwingung erstrecken). Auf dies Weise kann insbesondere bei tragbaren Messgeräten eine erheblich Einsparung des Energieverbrauchs erzielt werden, wodurch beispielsweise die Stromversorgungselemente in Abmessungen und Gewicht wesentlich reduziert werden können. In ähnlicher Weise kann auch auf der Signalerfassungsseite die Elektronik, d.h. insbesondere der Signalverarbeitungsprozessor, zur Energieersparnis während des Intervalls zwischen zwei Abtastungen stillgelegt werden.

Die erste Filtereinheit weist vorzugsweise einen Tiefpaß auf, der als Aliasing-Filter bezüglich der Abtastung durch die A/D-Wandlerstufe wirkt, wobei ferner vorzugsweise ein Hochpaß vorgesehen ist, um niederfrequente Störsignale auszublenden. Die erste Filtereinheit wird üblicherweise als Analogfilter ausgebildet sein. Ferner ist vorzugsweise nach der ersten Filtereinheit ein steuerbarer Verstärker vorgesehen, um das Filtersignal auf die für die A/D-Wandlerstufe optimal geeignete Amplitude zu bringen.

Vorzugsweise wird die Geschwindigkeit des Prüflings durch Messung, beispielsweise mittels eines Encoders, bestimmt. Falls eine Messung der Prüfungsgeschwindigkeit nicht unbedingt erforderlich ist, weil sie beispielsweise zu jedem Messzeitpunkt mit hinreichender Genauigkeit ohnehin bekannt ist, kann die Geschwindigkeit auch als Parameter fest vorgegeben werden.

Die Steuerung der A/D-Wandlerstufe, d.h. die Wahl der Triggerzeitpunkte, sowie die Verarbeitung des von der A/D-Wandlerstufe gelieferten digitalen Signals erfolgt vorzugsweise mittels eines digitalen Signalprozessors, der vorzugsweise auch die zweite Filtereinheit bildet. Die Ansteuereinrichtung zum Triggern der A/D-Wandlerstufe weist vorzugsweise eine Quelle für ein binäres Signal auf, die von einem Timer gebildet werden kann, und einen Teiler auf, mittels welchem das binäre Signal durch eine ganze Zahl geteilt wird, um das Triggersignal für die A/-Wandlerstufe zu erzeugen, wobei das binäre Signal von einem Kurvenformer bearbeitet wird, um die Versorgungsspannung für den Sender zu liefern. Der Timer kann als Teil des digitalen Signalsprozessors oder separat davon ausgebildet sein. Der Teiler ist vorzugsweise separat von dem Signalprozessor als PAL (Programmable Array Logic)-Baustein ausgebildet.

Im folgenden wird die Erfindung anhand der beigefügten Zeichnungen beispielhaft näher erläutert. Dabei zeigen:
- Fig. 1: schematisch den Aufbau eines Ausführungsbeispiels einer WirbelstromMessvorrichtung gemäß der vorliegenden-Erfindung; und
- Fig. 2: schematisch einen beispielhaften Verlauf des Sondensignals bei der digitalen Abtastung.

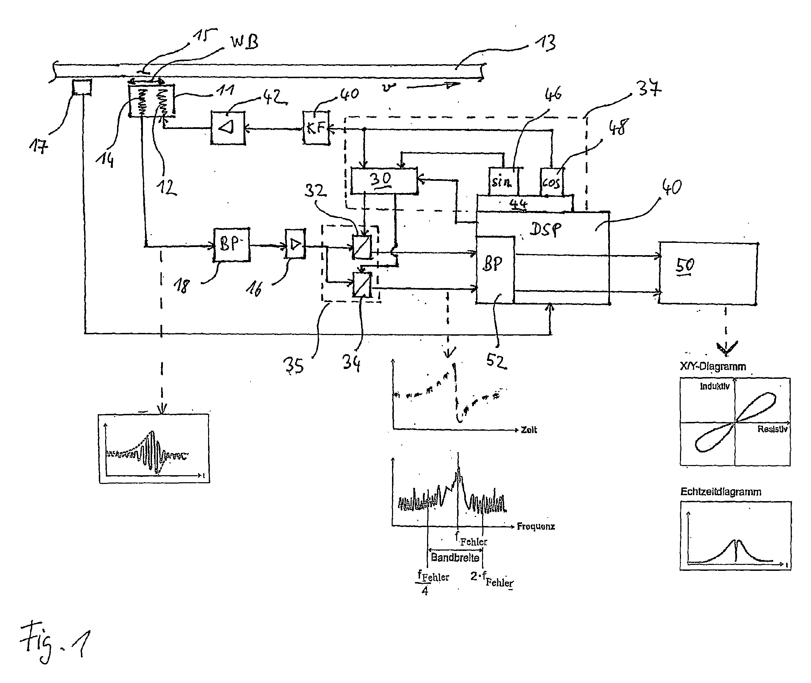

In Fig. 1 ist ein Beispiel für den Aufbau einer erfindungsgemäßen Wirbelstrommessvorrichtung gezeigt. Dabei wird ein Prüfling 13 in Form eines industriellen Halbzeugs, z.B. einer Bramme, geprüft, der sich mit variabler Geschwindigkeit *v* an einer Teststation 11 linear vorbei bewegt, wobei die Geschwindigkeit mittels eines Geschwindigkeitsaufnehmers 17 erfasst wird, welcher beispielsweise ein Signal abgeben kann, das zur Geschwindigkeit *v* im wesentlichen proportional ist. Dabei kann es sich beispielsweise um ein Rechtecksignal handeln, welches beispielsweise pro 5 mm Vorschub des Prüflings 13 einen Impuls enthält.

Die Teststation 11 weist einen Sender in Form einer Sendespule 12 sowie eine Sonde in Form einer Empfangsspule 14 auf. Die Sendespule 12 dient dazu, mittels eines elektromagnetischen Wechselfeldes mit mindestens einer vorgegebenen Trägerfrequenz Wirbelströme in dem Prüfling 13 zu induzieren, die in der Empfangsspule 14 wiederum eine als Sondensignal wirkende Wechselspannung induzieren, die eine Trägerschwingung mit der Trägerfrequenz der Sendespule 12 aufweist, wobei die Amplitude und die Phase des Sondensignals durch einen Fehler 15 moduliert wird, wenn der Fehler 15 in die Wirkbreite WB der Empfangsspule 14 gelangt. Die Empfangsspule 14 ist vorzugsweise als Differenzsspule ausgebildet, d.h. als Spule mit zwei in entgegengesetzter Richtung gewickelten Wicklungen, die nur auf Veränderungen der elektrischen Eigenschaften des Prüflings aufgrund der Anwesenheit eines Fehlers 15 reagiert. Differenzspulen sind vor allem für die Erkennung von plötzlichen Veränderungen im Prüfling 13 geeignet. Statt dessen könnte jedoch auch eine Absolutspule als Empfangsspule 14 verwendet werden, die mehrere in der selben Richtung gewickelte Wicklungen umfasst und insbesondere zum Erkennen von langen homogenen Veränderungen im Prüfling 13 geeignet ist.

Die Spannung für die Sendespule 12 kann beispielsweise dadurch erzeugt werden, dass ein von einer Timer-Einheit 44 erzeugtes binäres Signal an einen Generator 48 als Vorgabefrequenz geliefert wird, der daraus ein Rechtecksignal oder auch ein Sinussignal erzeugt, welches einen Kurvenformer 40 durchläuft und anschließend mittels eines Leistungsverstärkers 42 verstärkt wird, bevor es der Sendespule 12 zugeführt wird. Vorzugsweise hat das Signal sinusartige Form und enthält im einfachsten Fall nur eine einzige Trägerfrequenz, wobei jedoch grundsätzlich auch Messungen mit gleichzeitig mehreren Trägerfrequenzen und/oder von Sinus-Schwingungen deutlich abweichenden Trägersignalen möglich. Typischerweise liegt die Trägerfrequenz im Bereich von 1 kHz bis 5 MHz.

Das von der Empfangsspule 14 aufgenommene Sondensignal durchläuft einen Bandpaß 18 sowie eine einstellbaren Vorverstärker 16, bevor es einer A/D-Wandlerstufe 35 zugeführt wird. Der Bandpass 18 dient einerseits mittels des Tiefpasses als (Anti-)Aliasing-Filter hinsichtlich der Digitalisierung des Signals durch die A/D-Wandlerstufe 35 sowie andererseits mittels des Hochpasses zum Ausblenden von niederfrequenten Störsignalen. Der einstellbare Vorverstärker 16 dient dazu, die Amplitude des analogen Sondensignals auf die für die A/D-Wandlerstufe 35 optimal geeignete Amplitude zu bringen.

Die A/D-Wandlerstufe 35 weist zwei parallel geschaltete A/D-Wandler 32 und 34 auf, welche eine hohe Auflösung, jedoch mindestens eine Auflösung von 16 Bit, vorzugsweise mindestens 22 Bit, haben sollten und vorzugsweise mindestens 500 A/D-Wandlungen pro Sekunde durchführen können sollten. Die A/D-Wandler 32, 34 sind vorzugsweise als Flash-Wandler oder SAR (Sukzessives Approximations-Register)-Wandler ausgebildet.

Die A/D-Wandlerstufe 35 wird von einer Ansteuereinrichtung 37 getriggert, welche die bereits erwähnte Timer-Einheit 44, den Cosinus-Generator 48, einen parallel dazu angeordneten Sinus-Generator 46 sowie einen Frequenzteiler 30 aufweist. Eingangsseitig liegt an dem Frequenzteiler 30 das von dem Cosinus-Generator 48 erzeugte Signal, welches die Frequenz der Trägerfrequenz des Versorgungssignals der Sendespule 12 hat, sowie das Signal des Sinus-Generators 46 an, welches dem Signal des Cosinus-Generators 48 entspricht, jedoch um 90° dazu phasenverschoben ist. In dem Frequenzteiler 30 werden diese beiden Signale hinsichtlich ihrer Frequenz durch eine ganze Zahl *n* geteilt. Das entsprechende frequenzreduzierte Ausgangssignal dient dazu, den A/D-Wandler 32 bzw. den A/D-Wandler 34 zu triggern. Die Auswahl der Zahl *n* für den Teiler 30 wird von einem digitalen Signalprozessor 40 in Abhängigkeit von der Fehlerfrequenz, d.h. dem Quotienten aus aktueller Prüflingsgeschwindigkeit *v* und der Wirkbreite WB der Empfangsspule 14, vorgenommen. Vorzugsweise wird *n* umgekehrt proportional zu der Fehlerfrequenz gewählt, um zu erreichen, dass die Triggerrate der A/D-Wandlerstufe 35 mindestens annähernd proportional zu der Fehlerfrequenz ist. Auf diese Weise wird erreicht, dass, wenn man die Wirkbreite WB in erster Näherung als konstant annimmt, bei höherer Prüflingsgeschwindigkeit *v* und damit höherer Fehlerfrequenz das analoge Sondensignal entsprechend häufiger abgetastet wird.

Vorzugsweise ist der Teiler 30 als sogenanntes PAL (Programmable Array Logic)-Baustein ausgebildet, um sicher zu stellen, dass die Triggersignale möglichst unverzögert, d.h. synchron, zu dem Ausgangssignal des Cosinus-Generators 48 und Sinus-Generators 46 und ohne Phasenjitter bei der A/D-Wandlerstufe 35 ankommen.

Aufgrund der entsprechenden Phasenverschiebung der beiden Eingangssignale des Teilers 30 erfolgt auch die Triggerung der beiden A/D-Wandler 32, 34 mit einem festen Phasenversatz von 90°. Auf diese Weise kann das analoge Sondensignal zweikomponentig ausgewertet werden, d.h. sowohl hinsichtlich Amplitude als auch Phase. Es versteht sich, dass die Phasenverzögerung zwischen dem Triggersignal der A/D-Wandlerstufe 35 und dem Signal der Sendespule 12 möglichst gering sein sollte, wobei insbesondere auch ein sogenannter Phasenjitter vermieden werden sollte, d.h. die Phasenbeziehungen sollten zeitlich möglichst genau konstant sein.

Mit der gezeigten Ansteuereinrichtung 37 wird sichergestellt, dass das analoge Sondensignal von jedem A/D-Wandler 32 bzw. 34 höchstens einmal pro Vollwelle der Trägerschwingung abgetastet wird (in diesem Fall ist *n* gleich 1). Je nach aktueller Fehlerfrequenz, d.h. Prüflingsgeschwindigkeit v, kann *n* jedoch wesentlich größer als 1 werden, so dass nur noch in jeder *n*-ten Vollwelle der Trägerschwingung überhaupt eine Abtastung erfolgt.

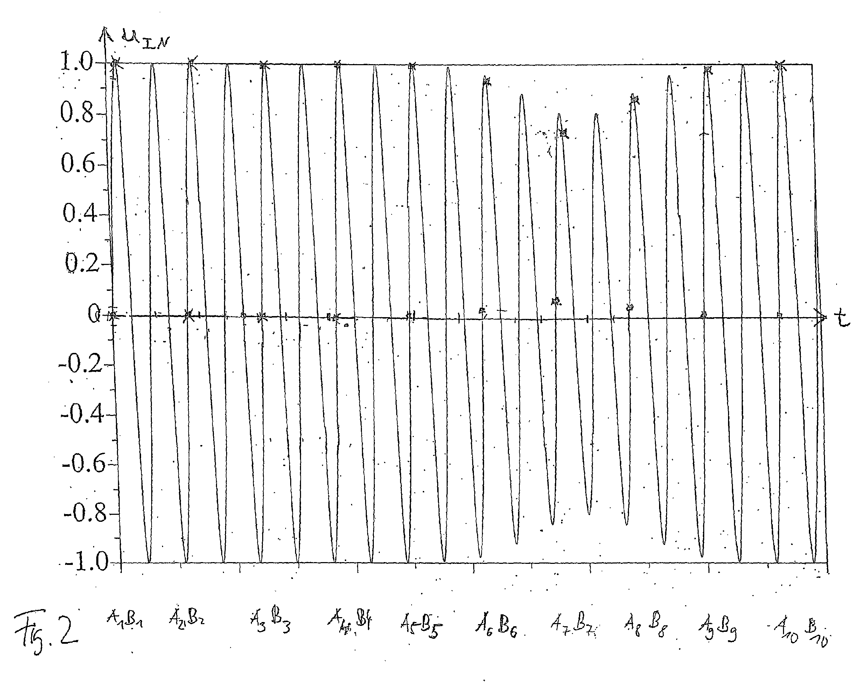

In Fig. 2 ist ein Beispiel gezeigt, in welchem *n* gleich 2 ist, d.h. es wird nur in jeder zweite Vollwelle von jedem A/D-Wandler 32, 34 je eine Abtastung Aₙ bzw. Bₙ vorgenommen.

Da in allen Fällen jedoch je A/D-Wandler 32, 34 höchstens einmal pro Vollwelle abgetastet wird, wird durch diese Unterabtastung die Frequenz der Trägerschwingung, d.h. die Trägerfrequenz, aus dem digitalen Signal eliminiert, d.h. mittels der Unterabtastung erfolgt eine Demodulation des analogen Sondensignals.

Vorzugsweise wird *n* so gewählt, dass in dem Zeitintervall, in welchem ein nennenswertes Fehlersignal beobachtet wird, d.h. in dem Zeitintervall, in welchem sich ein Punkt des Fehlers 15 durch die Wirkbreite WB der Empfangsspule 14 bewegt, d.h. in dem Zeitintervall, das im wesentlichen dem Inversen der Fehlerfrequenz entspricht, mindestens 5, vorzugsweise mindestens 20, Abtastungen durch jeden A/D-Wandler 32 bzw. 34 vorgenommen werden, um die in dem Fehlersignal enthaltene Information noch in einer für eine sichere Fehlererkennung ausreichenden Weise zu erhalten. In der Regel werden jedoch nicht mehr als 50, höchstens 100, Abtastungen während eines solchen Zeitintervalls erforderlich sein.

Die Frequenz der Trägerschwingung sollte so gewählt werden, dass sie mindestens das Zehnfache der Fehlerfrequenz beträgt, da ansonsten das Fehlersignal von zu wenig Vollwellen der Trägerschwingung getragen wird und die Reproduzierbarkeit des Fehlers problematisch wird.

Das demodulierte digitale zweikanalige Ausgangssignal der A/D-Wandlerstufe 35 durchläuft einen digitalen Bandpass 52, der von dem Signalprozessor 40 dargestellt werden kann und der dazu dient, Störsignale, die außerhalb der Bandbreite des Fehlersignals liegen, auszublenden. Zu diesem Zweck wird die Eckfrequenz des Hochpasses vozugsweise so gewählt, dass sie weniger als ein Viertel der Fehlerfrequenz beträgt, während die Eckfrequenz des Tiefpasses vorzugsweise so gewählt wird, dass sie mindestens das Zweifache der Fehlerfrequenz beträgt, um das Ausblenden von Signalanteilen, die noch Information bezüglich des Fehlers enthalten, zu vermeiden.

Der digitale Bandpass 52 wird mit der Abtastrate der A/D-Wandlerstufe 35, d.h. der Triggerrate, getaktet, was den großen Vorteil beinhaltet, dass die Eckfrequenzen des Bandpasses bei Änderung der Fehlerfrequenz, d.h. bei Änderung der Prüflingsgeschwindigkeit *v*, automatisch mit der Fehlerfrequenz mitgezogen werden, da die Eckfrequenzen eines digitalen Bandpasses proportional zur Taktrate sind und die Taktrate über die Abtastrate, welche von der Ansteuereinheit 37 vorgegeben wird, automatisch an die Änderung der Fehlerfrequenz angepasst wird.

Die für die Bestimmung der Fehlerfrequenz erforderliche Information bezüglich der Wirkbreite WB kann dem Signalprozessor 40 entweder manuell eingegeben werden oder sie wird direkt von der Teststation 11 bereitgestellt, wie dies beispielsweise in der EP 0 734 522 B1 beschrieben ist.

Es versteht sich, dass das Messsystem analog auf eine Änderung der Fehlerfrequenz reagiert, die dadurch verursacht ist, dass zwar die Prüflingsgeschwindigkeit *v* konstant gehalten wird, jedoch die Empfangsspule 14 gegen eine andere mit unterschiedlicher Wirkbreite WB ausgetauscht wird.

Das nach Filterung durch den digitalen Bandpass 52 erhaltene Nutzsignal wird in an sich bekannter Weise in einer Auswerteeinheit 50 ausgewertet, um Fehler 15 des Prüflings 13 zu erkennen und zu lokalisieren, wobei hier üblicherweise sowohl die Amplituden- als auch Phaseninformation des Fehlersignals herangezogen wird.

Insbesondere bei relativ großen Werten von *n*, d.h. wenn nur eine relativ kleine Zahl der Vollwellen der Trägerschwingung überhaupt abgetastet wird, kann während der Abtastpausen beispielsweise die Sendespule 12 und/oder die Auswerteelektronik, d.h. insbesondere der Signalprozessor 40, ausgeschaltet bzw. ruhig gestellt werden, um eine Verringerung der Leistungsaufnahme zu erzielen, was insbesondere für tragbare Messgeräte von Bedeutung ist.

## Patentansprüche

1. Verfahren zur zerstörungs- und berührungsfreien Erfassung von Fehlern, insbesondere mittels Wirbelströmen, in einem relativ zu einer durch eine Wirkbreite (WB) charakterisierte Sonde (14) mit einer Geschwindigkeit (v) bewegten Prüfling (13),
wobei
der Prüfling mittels eines Senders (12) mit periodischen elektromagnetischen Wechselfeldern beaufschlagt wird und mittels der Sonde ein periodisches elektrisches Signal erfasst wird, das eine Trägerschwingung aufweist, deren Amplitude und/oder Phase durch einen Fehler (15) in dem Prüfling moduliert wird, wenn der Fehler in die Wirkbreite der Sonde gelangt,
das Sondensignal mittels einer frequenzselektiven ersten Filtereinheit (18) gefiltert wird,
das mittels der ersten Filtereinheit gefilterte Signal mittels einer triggerbaren A/D-Wandlerstufe (35) abgetastet wird, um ein demoduliertes digitales Messsignal zu erhalten,
das digitale Messsignal mittels einer digitalen frequenzselektiven, einstellbaren zweiten Filtereinheit (52) gefiltert wird, um ein Nutzsignal zu gewinnen, und
das Nutzsignal ausgewertet wird, um einen Fehler in dem Prüfling zu erkennen,
wobei die A/D-Wandlerstufe mit einem *n*-ten, ganzzahligen Bruchteil der Frequenz der Trägerschwingung getriggert wird, wobei *n* in Abhängigkeit von der Fehlerfrequenz, die sich als Quotient aus der Relativ-Geschwindigkeit (*v*) zwischen Prüfling und Sonde und der Wirkbreite (WB) der Sonde ergibt, gewählt wird, und wobei die frequenzselektive zweite Filtereinheit in Abhängigkeit von der Fehlerfrequenz eingestellt wird.

2. Verfahren gemäß Anspruch 1, **dadurch gekennzeichnet, dass** die Relativ-Bewegung zwischen dem Prüfling (13) und der Sonde (14) **dadurch** entsteht, dass der Prüfling linear zur Sonde bewegt wird.

3. Verfahren gemäß Anspruch 1, **dadurch gekennzeichnet, dass** die Relativ-Bewegung zwischen dem Prüfling und der Sonde **dadurch** entsteht, dass die Sonde bezüglich des Prüflings rotiert.

4. Verfahren gemäß einem der vorhergehenden Ansprüche, **dadurch gekennzeichnet, dass** es sich bei dem Sender um eine Spule (12) handelt, an die eine hochfrequente Wechselspannung im Frequenzbereich von 1 kHz bis 5 MHz angelegt wird, um in dem Prüfling (13) Wirbelströme zu induzieren, wobei es sich bei der Sonde um eine Spulenanordnung (14) handelt, in welcher die Wirbelströme das periodische Signal induzieren.

5. Verfahren gemäß einem der vorhergehenden Ansprüche, **dadurch gekennzeichnet, dass** der Sender (12) mit einer Wechselspannung versorgt wird, um die periodischen elektromagnetischen Wechselfelder zu erzeugen, wobei die Wechselspannung aus einem binären Signal durch Kurvenformung erzeugt wird.

6. Verfahren gemäß Anspruch 5, **dadurch gekennzeichnet, dass** das Triggersignal für die A/D-Wandlerstufe (35) **dadurch** erzeugt wird, dass die Frequenz des für die Erzeugung der Wechselspannung für den Sender (12) verwendeten binären Signals durch *n* geteilt wird.

7. Verfahren gemäß einem der vorhergehenden Ansprüche, **dadurch gekennzeichnet, dass** *n* umgekehrt proportional zu der Fehlerfrequenz gewählt wird, um die Triggerrate der A/D-Wandlerstufe (35) mindestens annähernd proportional zu der Fehlerfrequenz zu wählen.

8. Verfahren gemäß einem der vorhergehenden Ansprüche, **dadurch gekennzeichnet, dass** *n* so gewählt wird, dass in ein Zeitintervall, das dem Inversen der Fehlerfrequenz entspricht, mindestens 5, vorzugsweise mindestens 20, Abtastungen durch die A/D-Wandlerstufe (35) fallen.

9. Verfahren gemäß einem der vorhergehenden Ansprüche, **dadurch gekennzeichnet, dass** *n* so gewählt wird, dass in ein Zeitintervall, das dem Inversen der Fehlerfrequenz entspricht, höchstens 100, vorzugsweise höchstens 50, Abtastungen durch die A/D-Wandlerstufe (35) fallen.

10. Verfahren gemäß einem der vorhergehenden Ansprüche, **dadurch gekennzeichnet, dass** das Einstellen der frequenzselektiven zweiten Filtereinheit (52) in Abhängigkeit von der Fehlerfrequenz selbsttätig dadurch erfolgt, dass die zweite Filtereinheit mit der Abtastrate der A/D-Wandlerstufe (35) getaktet wird.

11. Verfahren gemäß einem der vorhergehenden Ansprüche, **dadurch gekennzeichnet, dass** die zweite Filtereinheit (52) einen Tiefpass aufweist, um Störanteile des demodulierten digitalen Signals mit Frequenzen oberhalb der Fehlerfrequenz auszublenden, wobei die Eckfrequenz des Tiefpasses über der Fehlerfrequenz, vorzugsweise über dem Zweifachen der Fehlerfrequenz, liegt.

12. Verfahren gemäß einem der vorhergehenden Ansprüche, **dadurch gekennzeichnet, dass** die zweite Filtereinheit (52) einen Hochpass aufweist, um Gleichanteile des demodulierten digitalen Signals auszublenden, wobei die Eckfrequenz des Hochpasses unter der Fehlerfrequenz, vorzugsweise unter einem Viertel der Fehlerfrequenz, liegt.

13. Verfahren gemäß einem der vorhergehenden Ansprüche, **dadurch gekennzeichnet, dass** die Frequenz der Trägerschwingung so gewählt wird, dass sie mindestens das Zehnfache der Fehlerfrequenz beträgt.

14. Verfahren gemäß einem der vorhergehenden Ansprüche, **dadurch gekennzeichnet, dass** die A/D-Wandlerstufe (35), wenn sie getriggert wird, um eine feste Phasendifferenz versetzt zwei Werte abtastet, um das digitale Messsignal als zweikomponentiges Signal zu erhalten.

15. Verfahren gemäß Anspruch 14, **dadurch gekennzeichnet, dass** die Phasendifferenz 90° oder *m* * 360° + 90° ist, wobei *ṁ* eine ganze Zahl ist.

16. Verfahren gemäß Anspruch 14 oder 15, **dadurch gekennzeichnet, dass** die beiden Komponenten des von der A/D-Wandlerstufe (35) gelieferten digitalen Messsignal separat mittels der zweiten Filtereinheit (52) gefiltert werden, um das Nutzsignal als zweikomponentiges Signal zu gewinnen.

17. Verfahren gemäß Anspruch 16, **dadurch gekennzeichnet, dass** bei der Auswertung des Nutzsignals beide Komponenten berücksichtigt werden.

18. Verfahren gemäß einem der vorhergehenden Ansprüche, **dadurch gekennzeichnet, dass** die Beaufschlagung des Prüfling (13) mittels des Senders (12) mit den elektromagnetischen Wechselfeldern mindestens für einen Teil eines jeden Intervalls zwischen zwei aufeinander folgenden Triggersignalen für die A/D-Wandlerstufe (35) unterbrochen wird.

19. Verfahren gemäß einem der vorhergehenden Ansprüche, **dadurch gekennzeichnet, dass** die erste Filtereinheit (18) mindestens einen als Aliasingfilter bzgl. der Abtastung durch die A/D-Wandlerstufe (35) wirkenden Tiefpass aufweist.

20. Verfahren gemäß einem der vorhergehenden Ansprüche, **dadurch gekennzeichnet, dass** die erste Filtereinheit (18) einen Hochpass aufweist, um niederfrequente Störsignale auszublenden.

21. Verfahren gemäß einem der vorhergehenden Ansprüche, **dadurch gekennzeichnet, dass** die Geschwindigkeit (v) des Prüflings (13) durch Messung bestimmt oder als Parameter fest vorgegeben wird.

22. Verfahren gemäß einem der vorhergehenden Ansprüche, **dadurch gekennzeichnet, dass** der A/D-Wandlerstufe (35) ein steuerbarer Verstärkers (16) vorgeschaltet ist, um das Signal auf die für die A/D-Wandlerstufe optimal geeignete Amplitude zu bringen.

23. Verfahren gemäß Anspruch 1, **dadurch gekennzeichnet, dass** der Sender mittels elektromagnetischer Anregung Schallwellen in dem Prüfling erzeugt und die Sonde Schallwellen in dem Prüfling erfasst und in das periodische elektrische Signal wandelt.

24. Verfahren gemäß Anspruch 1, **dadurch gekennzeichnet, dass** der Sender Mikrowellen in den Prüfling einstrahlt und die Sonde Mikrowellen in das periodische elektrische Signal wandelt.

25. Vorrichtung zur zerstörungs- und berührungsfreien Erfassung, insbesondere mittels Wirbelströmen, von Fehlern (15) in einem relativ zu einer durch eine Wirkbreite (WB) charakterisierte Sonde (14) mit einer Geschwindigkeit (v) bewegten Prüfling (13), mit
einer Einrichtung (17) zum Erfassen der Relativ-Geschwindigkeit zwischen dem Prüfling und der Sonde,
einem Sender (12) zum Beaufschlagen des Prüflings mit periodischen elektromagnetischen Wechselfeldern,
der Sonde zum Erfassen eines periodischen elektrischen Signals, das eine Trägerschwingung aufweist, deren Amplitude und/oder Phase durch einen Fehler in dem Prüfling moduliert wird, wenn der Fehler in die Wirkbreite der Sonde gelangt,
einer frequenzselektiven ersten Filtereinheit (18) zum Filtern des Sondensignals,
einer triggerbaren A/D-Wandlerstufe (35) zum Abtasten des mittels der ersten Filtereinheit gefilterten Signals, um ein demoduliertes digitales Messsignal zu erhalten,
einer Ansteuereinrichtung (37) zum Triggern der A/D-Wandlerstufe mit einem *n*-ten, ganzzahligen Bruchteil der Frequenz der Trägerschwingung, wobei *n* in Abhängigkeit von der Fehlerfrequenz, die sich als Quotient aus der Relativ-Geschwindigkeit zwischen Prüfling und Sonde und der Wirkbreite der Sonde ergibt, gewählt wird,
einer in Abhängigkeit von der Fehlerfrequenz einstellbaren digitalen frequenzselektiven zweiten Filtereinheit (52) zum Filtern des digitalen Messsignals zwecks Gewinnung eines Nutzsignals, und
einer Auswerteeinheit (50) zum Auswerten des Nutzsignals zwecks Erkennung eines Fehlers in dem Prüfling.

26. Vorrichtung gemäß Anspruch 25, **dadurch gekennzeichnet, dass** die Sonde (14) als Differenzspule oder Absolutspule für Wirbelstrommessungen ausgebildet ist.

27. Vorrichtung gemäß einem der Ansprüche 25 oder 26, **dadurch gekennzeichnet, dass** eine binäre Signalquelle (44, 48) und ein Kurvenformer (40) vorgesehen sind, um aus einem binären Signal mittels Kurvenformung ein Versorgungsspannungsignal für den Sender (12) zu erzeugen.

28. Vorrichtung gemäß Anspruch 27, **dadurch gekennzeichnet, dass** die Ansteuereinrichtung (37) einen Teiler (30) aufweist, um aus dem binären Signal für den Kurvenformer (40) mittels Teilen durch *n* das Triggersignal für die A/D-Wandlerstufe (35) zu erzeugen.

29. Vorrichtung gemäß Anspruch 28, **dadurch gekennzeichnet, dass** die binäre Signalquelle als Timer(44) ausgebildet ist.

30. Vorrichtung gemäß einem der Ansprüche 25 bis 29, **dadurch gekennzeichnet, dass** die A/D-Wandlerstufe (35) eine Auflösung von mindestens 16 bit aufweist.

31. Vorrichtung gemäß einem der Ansprüche 25 bis 30, **dadurch gekennzeichnet, dass** die A/D-Wandlerstufe (35) mindestens einen Flash-Wandler oder SAR-Wandler aufweist.

32. Vorrichtung gemäß einem der Ansprüche 25 bis 31, **dadurch gekennzeichnet, dass** die zweite Filtereinheit (52) von einem digitalen Signalprozessor (40) gebildet wird.

33. Vorrichtung gemäß einem der Ansprüche 25 bis 32, **dadurch gekennzeichnet, dass** die A/D-Wandlerstufe (35) zwei parallel geschaltete A/D-Wandler (32, 34) aufweist, wobei die beiden A/D-Wandler mit gleicher Frequenz so getriggert werden, dass sie um eine feste Phasendifferenz versetzt abtasten, um das digitale Messsignal als zweikomponentiges Signal zu erhalten.

## Claims

1. Method for the nondestructive and contact-free detection of faults, particularly by means of eddy currents, in a test specimen (13) which is moved, at a speed (v), relative to a probe (14) that is **characterized by** an effective width (WB),
a transmitter (12) being used to apply periodic electromagnetic alternating fields to the test specimen and the probe being used to detect a periodic electrical signal which has a carrier oscillation whose amplitude and/or phase is/are modulated as a result of a fault (15) in the test specimen if the fault reaches the effective width of the probe,
the probe signal being filtered using a frequency-selective first filter unit (18),
the signal which has been filtered using the first filter unit being sampled by means of a triggerable A/D converter stage (35) in order to obtain a demodulated digital measurement signal,
the digital measurement signal being filtered using a digital frequency-selective adjustable second filter unit (52) in order to obtain a useful signal, and
the useful signal being evaluated in order to detect a fault in the test specimen,
the A/D converter stage being triggered at an nth integer fraction of the frequency of the carrier oscillation, *n* being selected as a function of the fault frequency which is obtained as the quotient of the relative speed (v) between the test specimen and the probe and the effective width (WB) of the probe, and the frequency-selective second filter unit being adjusted as a function of the fault frequency.

2. Method according to Claim 1, **characterized in that** the relative movement between the test specimen (13) and the probe (14) results from the test specimen being moved linearly with respect to the probe.

3. Method according to Claim 1, **characterized in that** the relative movement between the test specimen and the probe results from the probe rotating with respect to the test specimen.

4. Method according to one of the preceding claims, **characterized in that** the transmitter is a coil (12) to which a radiofrequency AC voltage in the frequency range from 1 kHz to 5 MHz is applied in order to induce eddy currents in the test specimen (13), the probe being a coil arrangement (14) in which the eddy currents induce the periodic signal.

5. Method according to one of the preceding claims, **characterized in that** the transmitter (12) is supplied with an AC voltage in order to generate the periodic electromagnetic alternating fields, the AC voltage being generated from a binary signal by curve shaping.

6. Method according to Claim 5, **characterized in that** the trigger signal for the A/D converter stage (35) is generated by dividing the frequency of the binary signal that is used to generate the AC voltage for the transmitter (12) by *n*.

7. Method according to one of the preceding claims, **characterized in that** *n* is selected to be inversely proportional to the fault frequency in order to select the trigger rate of the A/D converter stage (35) to be at least approximately proportional to the fault frequency.

8. Method according to one of the preceding claims, **characterized in that** *n* is selected in such a manner that at least 5, preferably at least 20, sampling operations are carried out by the A/D converter stage (35) in an interval of time which corresponds to the inverse of the fault frequency.

9. Method according to one of the preceding claims, **characterized in that** *n* is selected in such a manner that at most 100, preferably at most 50, sampling operations are carried out by the A/D converter stage (35) in an interval of time which corresponds to the inverse of the fault frequency.

10. Method according to one of the preceding claims, **characterized in that** the frequency-selective second filter unit (52) is automatically adjusted as a function of the fault frequency by the second filter unit being clocked at the sampling rate of the A/D converter stage (35).

11. Method according to one of the preceding claims, **characterized in that** the second filter unit (52) has a low-pass filter in order to remove interference components of the demodulated digital signal at frequencies higher than the fault frequency, the cut-off frequency of the low-pass filter being higher than the fault frequency, preferably higher than twice the fault frequency.

12. Method according to one of the preceding claims, **characterized in that** the second filter unit (52) has a high-pass filter in order to remove DC components of the demodulated digital signal, the cut-off frequency of the high-pass filter being less than the fault frequency, preferably less than a quarter of the fault frequency.

13. Method according to one of the preceding claims, **characterized in that** the frequency of the carrier oscillation is selected in such a manner that it is at least ten times the fault frequency.

14. Method according to one of the preceding claims, **characterized in that**, when it is triggered, the A/D converter stage (35) samples two values, in a manner offset by a fixed phase difference, in order to obtain the digital measurement signal in the form of a two-component signal.

15. Method according to Claim 14, **characterized in that** the phase difference is 90° or *m* * 360° + 90°, where *m* is an integer.

16. Method according to Claim 14 or 15, **characterized in that** the two components of the digital measurement signal which is provided by the A/D converter stage (35) are filtered separately using the second filter unit (52) in order to obtain the useful signal in the form of a two-component signal.

17. Method according to Claim 16, **characterized in that** the two components are taken into account when evaluating the useful signal.

18. Method according to one of the preceding claims, **characterized in that** the application of the electromagnetic alternating fields to the test specimen (13) using the transmitter (12) is interrupted at least for part of each interval between two successive trigger signals for the A/D converter stage (35).

19. Method according to one of the preceding claims, **characterized in that** the first filter unit (18) has at least one low-pass filter which acts as an aliasing filter as regards the sampling by the A/D converter stage (35).

20. Method according to one of the preceding claims, **characterized in that** the first filter unit (18) has a high-pass filter in order to remove low-frequency interference signals.

21. Method according to one of the preceding claims, **characterized in that** the speed (v) of the test specimen (13) is determined by means of measurement or is firmly prescribed as a parameter.

22. Method according to one of the preceding claims, **characterized in that** a controllable amplifier (16) is connected upstream of the A/D converter stage (35) in order to change the signal to the amplitude which is optimally suited to the A/D converter stage.

23. Method according to Claim 1, **characterized in that** the transmitter uses electromagnetic excitation to generate sound waves in the test specimen, and the probe detects sound waves in the test specimen and converts them into the periodic electrical signal.

24. Method according to Claim 1, **characterized in that** the transmitter radiates microwaves into the test specimen, and the probe converts microwaves into the periodic electrical signal.

25. Apparatus for the nondestructive and contact-free detection of faults (15), particularly by means of eddy currents, in a test specimen (13) which is moved, at a speed (v), relative to a probe (14) that is **characterized by** an effective width (WB), said apparatus having
a device (17) for detecting the relative speed between the test specimen and the probe,
a transmitter (12) for applying periodic electromagnetic alternating fields to the test specimen,
the probe for detecting a periodic electrical signal which has a carrier oscillation whose amplitude and/or phase is/are modulated as a result of a fault in the test specimen if the fault reaches the effective width of the probe,
a frequency-selective first filter unit (18) for filtering the probe signal,
a triggerable A/D converter stage (35) for sampling the signal which has been filtered using the first filter unit in order to obtain a demodulated digital measurement signal,
a drive device (37) for triggering the A/D converter stage at an nth integer fraction of the frequency of the carrier oscillation, *n* being selected as a function of the fault frequency which is obtained as the quotient of the relative speed between the test specimen and the probe and the effective width of the probe,
a digital frequency-selective second filter unit (52) which can be adjusted as a function of the fault frequency and is intended to filter the digital measurement signal for the purpose of obtaining a useful signal, and
an evaluation unit (50) for evaluating the useful signal for the purpose of detecting a fault in the test specimen.

26. Apparatus according to Claim 25, **characterized in that** the probe (14) is in the form of a differential coil or an absolute coil for measuring eddy currents.

27. Apparatus according to either of Claims 25 and 26, **characterized in that** a binary signal source (44, 48) and a curve shaper (40) are provided in order to generate a supply voltage signal for the transmitter (12) from a binary signal by means of curve shaping.

28. Apparatus according to Claim 27, **characterized in that** the drive device (37) has a divider (30) in order to generate the trigger signal for the A/D converter stage (35) from the binary signal for the curve shaper (40) by dividing said binary signal by *n*.

29. Apparatus according to Claim 28, **characterized in that** the binary signal source is in the form of a timer (44).

30. Apparatus according to one of Claims 25 to 29, **characterized in that** the A/D converter stage (35) has a resolution of at least 16 bits.

31. Apparatus according to one of Claims 25 to 30, **characterized in that** the A/D converter stage (35) has at least one flash converter or SAR converter.

32. Apparatus according to one of Claims 25 to 31, **characterized in that** the second filter unit (52) is formed by a digital signal processor (40).

33. Apparatus according to one of Claims 25 to 32, **characterized in that** the A/D converter stage (35) has two A/D converters (32, 34) which are connected in parallel, the two A/D converters being triggered at the same frequency in such a manner that they sample in a manner offset by a fixed phase difference in order to obtain the digital measurement signal in the form of a two-component signal.

## Revendications

1. Procédé de détection de défauts non destructif et sans contact, notamment au moyen de courants de Foucault, dans un échantillon (13) qui se déplace à une vitesse (v) par rapport à une sonde (14) **caractérisée par** une zone d'action (WB),
l'échantillon étant soumis à des champs alternatifs électromagnétiques périodiques au moyen d'un émetteur (12) et un signal électrique périodique étant détecté au moyen de la sonde, lequel présente une oscillation porteuse dont l'amplitude et/ou la phase est modulée par un défaut (15) dans l'échantillon lorsque le défaut pénètre dans la zone d'action de la sonde,
le signal de la sonde étant filtré au moyen d'une première unité de filtrage (18) à sélection de fréquence,
le signal filtré au moyen de la première unité de filtrage étant échantillonné au moyen d'un étage convertisseur A/N déclenchable (35) pour obtenir un signal de mesure numérique démodulé,
le signal de mesure numérique étant acheminé à une deuxième unité de filtrage (52) numérique réglable à sélection de fréquence afin d'obtenir un signal utile et
le signal utile étant analysé pour détecter un défaut dans l'échantillon,
l'étage convertisseur A/N étant déclenché avec une n^{ième} fraction entière de la fréquence de l'oscillation porteuse, n étant choisi en fonction de la fréquence du défaut, laquelle est obtenue sous la forme d'un quotient de la vitesse relative (v) entre l'échantillon et la sonde et de la zone d'action (WB) de la sonde, et la deuxième unité de filtrage à sélection de fréquence étant réglée en fonction de la fréquence du défaut.

2. Procédé selon la revendication 1, **caractérisé en ce que** le mouvement relatif entre l'échantillon (13) et la sonde (14) est produit par le fait que l'échantillon exécute un mouvement linéaire par rapport à la sonde.

3. Procédé selon la revendication 1, **caractérisé en ce que** le mouvement relatif entre l'échantillon et la sonde est produit par une rotation de la sonde par rapport à l'échantillon.

4. Procédé selon l'une des revendications précédentes, **caractérisé en ce que** l'émetteur est une bobine (12) à laquelle est appliquée une tension alternative à haute fréquence dans la plage de fréquences de 1 kHz à 5 MHz afin d'induire des courants de Foucault dans l'échantillon (13), la sonde étant un arrangement de bobines (14) dans lequel les courants de Foucault induisent le signal périodique.

5. Procédé selon l'une des revendications précédentes, **caractérisé en ce que** l'émetteur (12) est alimenté par une tension alternative afin de générer les champs alternatifs électromagnétiques périodiques, la tension alternative étant produite à partir d'un signal binaire par mise en forme de la courbe.

6. Procédé selon la revendication 5, **caractérisé en ce que** le signal de déclenchement pour l'étage de conversion A/N (35) est généré **en ce que** la fréquence du signal binaire utilisé pour générer la tension alternative pour l'émetteur (12) est divisée par n.

7. Procédé selon l'une des revendications précédentes, **caractérisé en ce que** n est choisi inversement proportionnel à la fréquence de défaut afin de choisir la fréquence de déclenchement de l'étage de conversion A/N (35) au moins approximativement proportionnelle à la fréquence de défaut.

8. Procédé selon l'une des revendications précédentes, **caractérisé en ce que** n est choisi de telle sorte qu'au moins 5, de préférence au moins 20 échantillonnages par l'étage de conversion A/N (35) ont lieu dans un intervalle de temps qui correspond à l'inverse de la fréquence de défaut.

9. Procédé selon l'une des revendications précédentes, **caractérisé en ce que** n est choisi de telle sorte qu'au maximum 100, de préférence au maximum 50 échantillonnages par l'étage de conversion A/N (35) ont lieu dans un intervalle de temps qui correspond à l'inverse de la fréquence de défaut.

10. Procédé selon l'une des revendications précédentes, **caractérisé en ce que** le réglage de la deuxième unité de filtrage (52) à sélection de fréquence s'effectue automatiquement en fonction de la fréquence de défaut **en ce que** la deuxième unité de filtrage est cadencée à la fréquence d'échantillonnage de l'étage de conversion A/N (35).

11. Procédé selon l'une des revendications précédentes, **caractérisé en ce que** la deuxième unité de filtrage (52) présente un filtre passe-bas pour supprimer les composantes parasites du signal numérique démodulé ayant des fréquences supérieures à la fréquence de défaut, la fréquence de coupure du filtre passe-bas étant supérieure à la fréquence de défaut, de préférence supérieure au double de la fréquence de défaut.

12. Procédé selon l'une des revendications précédentes, **caractérisé en ce que** la deuxième unité de filtrage (52) présente un filtre passe-haut pour supprimer les composantes continues du signal numérique démodulé, la fréquence de coupure du filtre passe-haut étant inférieure à la fréquence de défaut, de préférence inférieure à un quart de la fréquence de défaut.

13. Procédé selon l'une des revendications précédentes, **caractérisé en ce que** la fréquence de l'oscillation porteuse est choisie de telle sorte qu'elle est au moins égale au décuple de la fréquence de défaut.

14. Procédé selon l'une des revendications précédentes, **caractérisé en ce que** l'étage de conversion A/N (35), lorsqu'il est déclenché, échantillonne deux valeurs décalées d'un déphasage fixe afin d'obtenir le signal de mesure numérique sous la forme d'un signal à deux composantes.

15. Procédé selon la revendication 14, **caractérisé en ce que** la différence de phase est égale à 90° ou à m * 360° + 90°, m étant un nombre entier.

16. Procédé selon la revendication 14 ou 15, **caractérisé en ce que** les deux composantes du signal de mesure numérique délivré par l'étage de conversion A/N (35) sont filtrés séparément au moyen de la deuxième unité de filtrage (52) afin d'obtenir le signal utile sous la forme d'un signal à deux composantes.

17. Procédé selon la revendication 16, **caractérisé en ce que** les deux composantes sont prises en compte lors de l'analyse du signal utile.

18. Procédé selon l'une des revendications précédentes, **caractérisé en ce que** l'exposition de l'échantillon (13) aux champs alternatifs électromagnétiques au moyen de l'émetteur (12) est interrompue au moins pendant une partie de chacun des intervalles entre deux signaux de déclenchement successifs de l'étage de conversion A/N (35).

19. Procédé selon l'une des revendications précédentes, **caractérisé en ce que** la première unité de filtrage (18) présente au moins un filtre passe-bas faisant office de filtre anti-aliasing concernant l'échantillonnage par l'étage de conversion A/N (35).

20. Procédé selon l'une des revendications précédentes, **caractérisé en ce que** la première unité de filtrage (18) présente un filtre passe-haut pour supprimer les signaux parasites à basse fréquence.

21. Procédé selon l'une des revendications précédentes, **caractérisé en ce que** la vitesse (v) de l'échantillon (13) est déterminée par une mesure ou prédéfinie en tant que paramètre fixe.

22. Procédé selon l'une des revendications précédentes, **caractérisé en ce que** l'étage de conversion A/N (35) est précédé par un amplificateur commandable (16) afin d'amener le signal à l'amplitude optimale pour l'étage de conversion A/N.

23. Procédé selon la revendication 1, **caractérisé en ce que** l'émetteur génère des ondes sonores dans l'échantillon par excitation électromagnétique et la sonde détecte les ondes sonores dans l'échantillon et les convertit en le signal électrique périodique.

24. Procédé selon la revendication 1, **caractérisé en ce que** l'émetteur injecte des hyperfréquences dans l'échantillon et la sonde convertit les hyperfréquences en le signal électrique périodique.

25. Dispositif de détection non destructif et sans contact, notamment au moyen de courants de Foucault, de défauts (15) dans un échantillon (13) qui se déplace à une vitesse (v) par rapport à une sonde (14) **caractérisée par** une zone d'action (WB), comprenant un dispositif (17) pour détecter la vitesse relative entre l'échantillon et la sonde,
un émetteur (12) pour soumettre l'échantillon à des champs alternatifs électromagnétiques périodiques,
la sonde destinée à détecter un signal électrique périodique qui présente une oscillation porteuse dont l'amplitude et/ou la phase est modulée par un défaut dans l'échantillon lorsque le défaut pénètre dans la zone d'action de la sonde,
une première unité de filtrage (18) à sélection de fréquence pour filtrer le signal de la sonde,
un étage convertisseur A/N déclenchable (35) pour échantillonner le signal filtré au moyen de la première unité de filtrage afin d'obtenir un signal de mesure numérique démodulé,
une unité de commande (37) pour déclencher l'étage convertisseur A/N avec une n^{ième} fraction entière de la fréquence de l'oscillation porteuse, n étant choisi en fonction de la fréquence du défaut, laquelle est obtenue sous la forme d'un quotient de la vitesse relative entre l'échantillon et la sonde et de la zone active de la sonde,
une deuxième unité de filtrage (52) à sélection de fréquence numérique réglable en fonction de la fréquence du défaut pour filtrer le signal de mesure numérique en vue d'obtenir un signal utile, et une unité d'analyse (50) pour analyser le signal utile en vue de détecter un défaut dans l'échantillon.

26. Dispositif selon la revendication 25, **caractérisé en ce que** la sonde (14) est réalisée sous la forme d'une bobine différentielle ou d'une bobine absolue pour la mesure des courants de Foucault.

27. Dispositif selon l'une des revendications 25 ou 26, **caractérisé en ce qu'**il est prévu une source de signal binaire (44, 48) et un façonneur de courbe (40) afin de générer, à partir d'un signal binaire et par mise en forme de la courbe, un signal de tension d'alimentation pour l'émetteur (12).

28. Dispositif selon la revendication 27, **caractérisé en ce que** le dispositif de commande (37) présente un diviseur (30) pour générer le signal de déclenchement pour l'étage de conversion A/N (35) par division par n à partir du signal binaire pour le façonneur de courbe (40).

29. Dispositif selon la revendication 28, **caractérisé en ce que** la source de signal binaire est réalisée sous la forme d'un temporisateur (44).

30. Dispositif selon l'une des revendications 25 à 29, **caractérisé en ce que** l'étage de conversion A/N (35) présente une résolution d'au moins 16 bits.

31. Dispositif selon l'une des revendications 25 à 30, **caractérisé en ce que** l'étage de conversion A/N (35) présente au moins un convertisseur flash ou un convertisseur SAR.

32. Dispositif selon l'une des revendications 25 à 31, **caractérisé en ce que** la deuxième unité de filtrage (52) est formée par un processeur de signal numérique (40).

33. Dispositif selon l'une des revendications 25 à 32, **caractérisé en ce que** l'étage de conversion A/N (35) présente deux convertisseurs A/N (32, 34) branchés en parallèle, les deux convertisseurs A/N étant déclenchés à la même fréquence de telle sorte qu'ils effectuent un échantillonnage avec un déphasage fixe pour obtenir le signal de mesure numérique sous la forme d'un signal à deux composantes.
